# EUROPEAN PATENT SPECIFICATION

(11) **EP 3 078 573 B1**
(45) Date of publication and mention of the grant of the patent: **26.06.2019**
(21) Application number: 14868168.7
(22) Date of filing: 16.10.2014
(51) Int. Cl.: B62D 6/02, B62D 5/06, B62D 5/08, B62D 5/20, B66F 9/075

(54) **FORKLIFT**
GABELSTAPLER
CHARIOT ÉLÉVATEUR À FOURCHE

(30) Priority: 02.12.2013 KR 20130148527
(43) Date of publication of application: 12.10.2016
(73) Proprietor: Doosan Corporation, Seoul 100-730 (KR)
(72) Inventor: HAN, Dong Ho, Seoul 157-846 (KR)
(74) Representative: Gottschald, Jan
(86) International application number: PCT/KR2014/009707
(87) International publication number: WO 2015/083936

(56) References cited:
- JP-A- H 092 301
- JP-A- 2000 025 624
- KR-A- 19990 012 172
- KR-A- 20000 015 284
- KR-A- 20040 054 863
- KR-A- 20070 042 780
- KR-A- 20070 042 780
- KR-A- 20090 068 919
- US-A1- 2007 144 817
- US-B2- 7 716 926

## Description

### [Technical Field]

The present disclosure relates to a forklift, and more particularly, to a forklift which has improved straight traveling performance by reducing sensitivity of a direction change of the forklift to an operation of a steering wheel when the forklift travels at a high speed.

### [Background Art]

Forklifts are described in KR 2003 0056637, US 2007/144817 A1 and KR 2007 0042780 A. In JP H09 2301 A a hydraulic system for improving the steering feeling of a vehicle is described.

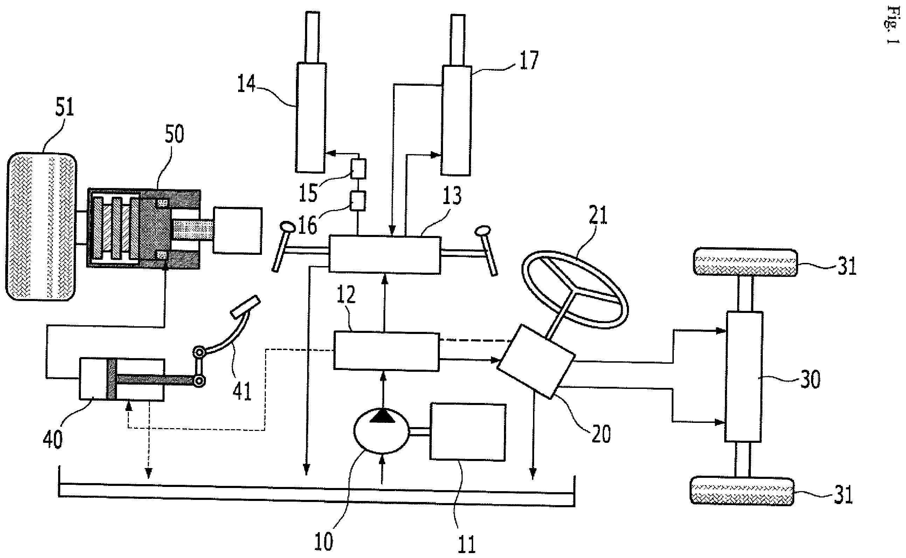

In general, a forklift is used to carry loads. In more detail, the forklift carries loads while changing a speed thereof to a low speed or a high speed in accordance with traveling routes. Meanwhile, the forklift is supplied with power from a power source and operates a hydraulic system, and the hydraulic system generates hydraulic pressure. The forklift travels by using hydraulic pressure, an engine, or a motor, or raises and lowers a fork by using hydraulic pressure. In addition, the fork may be provided on a mast, and the mast is operated to be tilted forward and rearward by hydraulic pressure. A typical configuration of the forklift will be described with reference to FIG. 1. In the hydraulic system of the forklift, hydraulic oil with pressure is discharged from a pump 10. The pump 10 is connected to a transmission 11, and the transmission 11 is connected to an engine.

A speed is changed to a first speed or a second speed in accordance with a speed change command inputted to the transmission 11, and the first speed may be understood as a low speed, and the second speed may be understood as a high speed.

The hydraulic oil discharged from the pump 12 is supplied to a main control valve 13 via a traveling priority valve 12.

Any one mode of the forklift between a working mode or a traveling mode may be selected. If the working mode is selected, an operation of a working machine (e.g., an operation of raising or lowering the fork, or tilting the mast, etc.) is preferentially carried out rather than traveling performance. If the traveling mode is selected, traveling performance is preferentially considered. The traveling priority valve 12 is a valve which is controlled to supply hydraulic oil to a traveling motor prior to the main control valve 13 when the traveling mode is selected.

The main control valve 13 provides hydraulic oil to respective actuators in order to perform substantial operations such as operations of raising or lowering the fork, tilting the mast, or adjusting an interval between two forks.

The respective actuators will be described in detail. The mast is provided with a lift actuator 14, and the lift actuator 14 serves to raise or lower the fork relative to the mast. A safety valve 15 and a control valve 16 are provided in a hydraulic line through which hydraulic oil is provided to the lift actuator 14. The safety valve 15 prevents hydraulic oil from reversely flowing due to a load applied to the lift actuator 14 and thus prevents the fork from freely falling. A limited flow rate to be applied to the hydraulic line is set to the control valve 16, and if a flow rate higher than the limited flow rate is set, the control valve 16 maintains a constant flow rate.

A tilt actuator 1 7 is installed between a main body and the mast of the forklift, and the tilt actuator 17 adjusts a tilt of the mast. In more detail, the tilt actuator 17 tilts the mast rearward in order to prevent the load from dropping from the fork.

Meanwhile, the forklift is provided with a steering unit 20. A steering wheel 21 is installed on the steering unit 20. In addition, the steering unit 20 is supplied with hydraulic oil from the traveling priority valve 12, and provides the hydraulic oil to a steering actuator 30 in accordance with an operation of the steering wheel 21. The steering actuator 30 adjusts a direction in which a rear wheel tire is disposed. That is, when the steering wheel 21 is rotated to the left, the rear wheel tire is adjusted such that a traveling direction of the forklift is changed to a left direction.

In addition, a master actuator 40 is installed in the forklift, and the master actuator 40 is provided with a pedal 41. Braking pressure may be generated in accordance with how much the pedal 41 is pressed, and the braking pressure is provided to a brake unit 50.

The brake unit 50 is connected with a front wheel tire 51, and when braking pressure is generated by the brake unit 50, a rotational speed of the front wheel tire 51 is decreased. Meanwhile, when no braking pressure is generated, power is provided to the front wheel tire 51 from a power train, such that the forklift may travel.

However, the forklift in the related art has the following problems.

In general, to change a traveling direction of the forklift, the steering wheel 21 is rotated about 3.5 to 5.5 times. This does not cause a large problem when a traveling speed of the forklift is low, but causes a problem when the forklift travels at a high speed. For example, the steering unit 20 reacts sensitively to the operation of the steering wheel 21. As a result, a direction may be changed when a rotation radius is smaller than a rotation radius of a direction change which is predicted by an operator.

That is, in the case of the forklift in the related art, since the sensitivity of the operation of the steering wheel 21 is very high, there is a problem in that straight traveling performance is not good.

### [Disclosure]

### [Technical Problem]

Therefore, a technical problem to be solved by the present disclosure is to provide a forklift which increases rotational displacement of a steering wheel by reducing a flow rate to be provided to a steering actuator when the forklift travels at a speed higher than a predetermined speed, and ensures stability of straight traveling by reducing sensitivity of a direction change of the forklift through an operation of rotating the steering wheel.

Technical problems to be solved by the present disclosure are not limited to the aforementioned technical problem, and other technical problems, which are not mentioned above, may be clearly understood from the following descriptions by those skilled in the art to which the present disclosure pertains.

### [Technical Solution]

To solve the above technical problem, a forklift according to an exemplary embodiment of the present disclosure includes: a transmission 11 which outputs power of which the speed is changed to a first speed or a second speed; a pump 10 which is operated by the power and discharges pressurized hydraulic oil; a traveling priority valve 12 which is controlled to provide the hydraulic oil preferentially to a traveling motor when a control unit selects a traveling mode; a steering unit 20 which is supplied with hydraulic oil from the traveling priority valve 12 and provided with a steering wheel 21 which is rotated to discharge hydraulic oil for a direction change; a steering actuator 30 which is operated by the hydraulic oil for the direction change so as to change a traveling direction of a rear wheel tire 31; a controller 100 which stores a predetermined traveling speed, and outputs a control command when a current traveling speed reaches or becomes higher than the predetermined traveling speed; and a control valve 200 which is installed in a hydraulic line through which hydraulic oil is provided from the traveling priority valve 12 to the steering unit 20, and controlled such that when the control command is outputted, an opening degree of the valve is decreased and a flow rate of hydraulic oil is decreased. The control valve is controlled such that when no control command is inputted, the valve is maximally opened and an opening degree of the valve is increased in proportion to a magnitude of the control command. The magnitude of the control command is outputted from the controller in proportion to a magnitude of the current traveling speed.

In the forklift according to the exemplary embodiment of the present disclosure, the current traveling speed may be computed based on a value of an engine rotational speed (rpm) provided from the engine control unit or a value of a driving speed provided from the transmission 11.

Other detailed matters of the exemplary embodiment are included in the detailed description and the drawings.

### [Advantageous Effects]

The forklift according to the exemplary embodiment of the present disclosure, which is configured as described above, may reduce a flow rate to be provided to the steering actuator when a traveling speed of the forklift reaches a predetermined speed. Therefore, since the steering wheel needs to be operated with a larger rotation amount, it is possible to reduce sensitivity of a direction change of the forklift to an operation of the steering wheel. That is, the forklift according to the exemplary embodiment of the present disclosure may improve straight traveling performance.

### [Description of Drawings]

FIG. 1 is a view for explaining a typical configuration of a forklift.
FIG. 2 is a view for explaining a forklift according to an exemplary embodiment of the present disclosure.

### [Description of Main Reference Numerals of Drawings]

10: Pump
11: Transmission
12: Traveling priority valve
13: Main control valve
14: Lift actuator
15: Safety valve
16: Control valve
17: Tilt actuator
20: Steering unit
21: Steering wheel
30: Steering actuator
31: Rear wheel tire
40: Master actuator
41: Pedal
50: Brake unit
51: Front wheel tire
100: Controller
200: Control valve

### [Best Mode]

Advantages and features of the present disclosure and methods of achieving the advantages and features will be clear with reference to exemplary embodiments described in detail below together with the accompanying drawings.

Hereinafter, an exemplary embodiment of the present disclosure will be described in detail with reference to the accompanying drawings. It should be appreciated that the exemplary embodiments, which will be described below, are illustratively described to help understand the present disclosure, and the present disclosure may be variously modified to be carried out differently from the exemplary embodiments described herein. However, in the description of the present disclosure, the specific descriptions and illustrations of publicly known functions or constituent elements will be omitted when it is determined that the specific descriptions may unnecessarily obscure the subject matter of the present disclosure. In addition, to help understand the present disclosure, the accompanying drawings are not illustrated based on actual scales, but parts of the constituent elements may be exaggerated in size.

Meanwhile, the terms used in the description are defined considering the functions of the present disclosure and may vary depending on the intention or usual practice of a manufacturer. Therefore, the definitions should be made based on the entire contents of the present specification.

Like reference numerals indicate like elements throughout the specification.

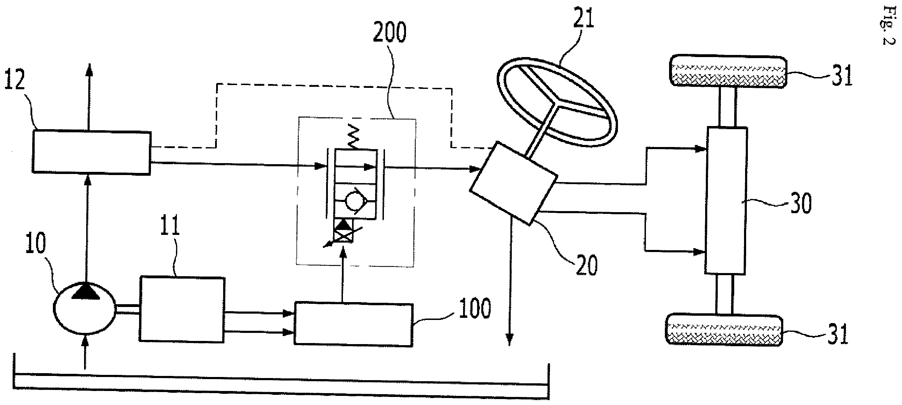

Hereinafter, a forklift according to an exemplary embodiment of the present disclosure will be described with reference to FIG. 2. The attached FIG. 2 is a view for explaining the forklift according to the exemplary embodiment of the present disclosure.

The forklift according to the exemplary embodiment of the present disclosure is equipped with a hydraulic system. The hydraulic system may be operated by being supplied with power from an engine or an electric motor.

A pump 10 is operated by power, and discharges pressurized hydraulic oil. The hydraulic oil is provided to respective actuators from a main control valve 13.

The power may be transmitted after a speed thereof is changed to a first speed or a second speed by a transmission 11.

Meanwhile, in a case in which a power source is an engine, an engine rotational speed (rpm) is outputted from an engine control unit (ECU). That is, a current traveling speed may be computed from the engine rotational speed (rpm).

In addition, a driving speed may be obtained from the transmission 11. That is, since the transmission 11 serves to operate the pump 10, a current traveling speed may be computed from a value of the driving speed.

The forklift according to the exemplary embodiment of the present disclosure is equipped with a control unit. The control unit may decide whether to preferentially allow the forklift to work or preferentially allow the forklift to travel. That is, the control unit selects a mode from a working mode in which the forklift preferentially works and a traveling mode in which the forklift preferentially travels.

Meanwhile, in the hydraulic system, a traveling priority valve 12 is installed in a hydraulic line through which hydraulic oil is delivered from the pump 10 to the main control valve 13.

That is, if the control unit selects the traveling mode, the traveling priority valve 12 is controlled to provide hydraulic oil preferentially to a traveling motor.

In addition, a steering unit 20 is provided with a steering wheel 21. A direction of the forklift is changed by rotating the steering wheel 21, and in this case, the steering unit 20 is supplied with hydraulic oil from the traveling priority valve 12, and provides a steering actuator 30 with hydraulic oil as much as the rotation amount of the steering wheel 21. That is, the steering unit 20 discharges hydraulic oil for a direction change.

The steering actuator 30 is operated by the hydraulic oil for a direction change in order to change a traveling direction of a rear wheel tire 31. That is, the traveling direction of the rear wheel tire 31 is determined depending on a flow direction of hydraulic oil, and a degree of a direction change is determined depending on a flow rate of hydraulic oil.

The forklift according to the invention includes a controller 100 and a control valve 200.

The controller 100 stores a predetermined traveling speed, and outputs a control command when a current traveling speed reaches or becomes higher than the predetermined traveling speed.

The predetermined traveling speed may be preset in advance by a manufacturer, and may be renewed later by a vehicle manager. In addition, the predetermined traveling speed may be set in accordance with a driver's intention.

In the case of the forklift according to a non-claimed exemplary embodiment of the present disclosure, the current traveling speed may be computed based on a value of the engine rotational speed (rpm) provided from the engine control unit. In addition, in the case of a forklift according to another non-claimed exemplary embodiment of the present disclosure, the current traveling speed may be computed based on a value of a driving speed provided from the transmission 11. That is, in any exemplary embodiment, the current traveling speed may be accurately computed.

On the other hand, the current traveling speed may be computed based on a value of the engine rotational speed (rpm) provided from the engine control unit or a value of the driving speed provided from the transmission 11. Therefore, the current traveling speed may be computed based on any one value between a value of the engine rotational speed and a value of the driving speed even when the other value is not received.

The control valve 200 is installed in the hydraulic line through which hydraulic oil is provided from the traveling priority valve 12 to the steering unit 20. The control valve 200 is controlled such that when the control command is outputted from the controller 100, an opening degree of the valve is decreased and thus a flow rate of hydraulic oil is decreased.

In more detail, the control valve 200 is controlled such that when no control command is inputted, the valve is maximally opened and an opening degree of the valve is controlled to be opened in proportion to a magnitude of the control command. Therefore, when the operator rotates the steering wheel 21 while the forklift travels, rotational displacement of the steering wheel 21 is not rapidly changed, such that the forklift may travel sensitively and stably.

The magnitude of the control command is outputted from the controller 100 in proportion to a magnitude of the current traveling speed.

Therefore, the forklift according to the present disclosure may reduce a flow rate to be provided to the steering actuator 30 when a traveling speed of the forklift reaches a predetermined speed. Therefore, since a flow rate required for the steering actuator 30 is satisfied only when the steering wheel 21 is operated with a larger rotation amount, a degree to which the steering wheel 21 is rotated is increased. Accordingly, the forklift according to the exemplary embodiment of the present disclosure may reduce sensitivity of a direction change of the forklift to an operation of rotating the steering wheel 21, and improve straight traveling performance.

The exemplary embodiment of the present disclosure has been described with reference to the accompanying drawings, but those skilled in the art will understand that the present disclosure may be carried out in any other specific form without changing an essential feature thereof.

Accordingly, it should be understood that the aforementioned exemplary embodiment is described for illustration in all aspects and is not limited, and the scope of the present disclosure shall be represented by the claims to be described below, and it should be construed that all of the changes or modified forms induced from the meaning and the scope of the claims.

### [Industrial Applicability]

The forklift according to the present disclosure may be used to ensure stable traveling performance even though the steering wheel is rapidly operated when the forklift travels at a high speed.

## Claims

1. A forklift comprising:
a transmission (11) which outputs power of which the speed is changed to a first speed or a second speed;
a pump (10) which is operated by the power and discharges pressurized hydraulic oil;
a traveling priority valve (12) which is controlled to provide the hydraulic oil preferentially to a traveling motor when a control unit selects a traveling mode;
a steering unit (20) which is supplied with hydraulic oil from the traveling priority valve (12) and provided with a steering wheel (21) which is rotated to discharge hydraulic oil for a direction change and
a steering actuator (30) which is operated by the hydraulic oil for the direction change so as to change a traveling direction of a rear wheel tire (31);
**characterized in that**
a controller (100) stores a predetermined traveling speed, and outputs a control command in proportion to a magnitude of the current traveling speed when a current traveling speed reaches or becomes higher than the predetermined traveling speed; and
a control valve (200) is installed in a hydraulic line through which hydraulic oil is provided from the traveling priority valve (12) to the steering unit (20),
and the control valve (200) is controlled such that the valve (200) is maximally opened when no control command is inputted
and an opening degree of the valve (200) is controlled to be opened in proportion to a magnitude of the control command,
and
the control valve (200) is controlled such that when the control command is outputted, an opening degree of the valve (200) is decreased and a flow rate of hydraulic oil is decreased.

2. The forklift of claim 1, wherein the current traveling speed is computed based on a value of an engine rotational speed (rpm) provided from an engine control unit or a value of a driving speed provided from the transmission 11.

## Patentansprüche

1. Gabelstapler, der Folgendes umfasst:
ein Getriebe (11), das Leistung abgibt, deren Drehzahl in eine erste Drehzahl oder eine zweite Drehzahl geändert wird;
eine Pumpe (10), die durch die Leistung betrieben wird und mit Druck beaufschlagtes Hydrauliköl auslässt;
ein Fahrprioritätsventil (12), das dahingehend gesteuert wird, das Hydrauliköl bevorzugt einem Fahrmotor zuzuführen, wenn eine Steuereinheit einen Fahrmodus auswählt;
eine Lenkeinheit (20), die mit Hydrauliköl von dem Fahrprioritätsventil (12) versorgt wird und mit einem Lenkrad (21) versehen ist, das zum Auslassen von Hydrauliköl für einen Richtungswechsel gedreht wird, und
einen Lenkaktuator (30), der von dem Hydrauliköl für den Richtungswechsel dahingehend betrieben wird, eine Fahrrichtung eines Hinterradreifens (31) zu ändern;
**dadurch gekennzeichnet, dass**
eine Steuerung (100) eine vorbestimmte Fahrgeschwindigkeit speichert und einen Steuerbefehl proportional zu einer Höhe der aktuellen Fahrgeschwindigkeit ausgibt, wenn die aktuelle Fahrgeschwindigkeit eine vorbestimmte Fahrgeschwindigkeit erreicht oder überschreitet; und
ein Steuerventil (200) in einer Hydraulikleitung installiert ist, durch die Hydrauliköl von dem Fahrprioritätsventil (12) zu der Lenkeinheit (20) geleitet wird, und das Steuerventil (200) derart gesteuert wird, dass das Ventil (200) im höchsten Maße geöffnet ist, wenn kein Steuerbefehl eingegeben wird, und ein Öffnungsgrad des Ventils (200) so gesteuert wird, dass es proportional zur Größenordnung des Steuerbefehls geöffnet wird,
und das Steuerventil (200) derart gesteuert wird, dass bei Ausgabe des Steuerbefehls ein Öffnungsgrad des Ventils (200) verringert wird und ein Hydrauliköldurchsatz verringert wird.

2. Gabelstapler nach Anspruch 1, wobei die aktuelle Fahrgeschwindigkeit basierend auf einem Wert einer Motordrehzahl (U/min), der von einem Motorsteuergerät bereitgestellt wird, oder einem Wert einer Antriebsdrehzahl, der von dem Getriebe 11 bereitgestellt wird, berechnet wird.

## Revendications

1. Chariot élévateur à fourche, comprenant :
une transmission (11) qui fournit de la puissance dont la vitesse est modifiée à une première vitesse ou à une deuxième vitesse ;
une pompe (10) qui est commandée par la puissance et qui décharge de l'huile hydraulique sous pression ;
une soupape de priorité de déplacement (12) qui est commandée pour fournir de l'huile hydraulique de préférence à un moteur de déplacement lorsqu'une unité de commande choisit un mode de déplacement ;
une unité de direction (20) qui est alimentée en huile hydraulique provenant de la soupape de priorité de déplacement (12) et qui est pourvue d'un volant de direction (21) qui est tourné pour décharger de l'huile hydraulique en vue d'un changement de direction et
un actionneur de direction (30) qui est commandé par l'huile hydraulique pour le changement de direction de manière à changer une direction de déplacement d'un pneu de roue arrière (31) ;
**caractérisé en ce que**
un dispositif de commande (100) mémorise une vitesse de déplacement prédéterminée et fournit en sortie un ordre de commande de manière proportionnelle à une amplitude de la vitesse de déplacement actuelle lorsqu'une vitesse de déplacement actuelle atteint ou dépasse la vitesse de déplacement prédéterminée ; et
une soupape de commande (200) est installée dans une conduite hydraulique à travers laquelle de l'huile hydraulique est fournie à l'unité de direction (20) à partir de la soupape de priorité de déplacement (12), et la soupape de commande (200) est commandée de telle sorte que la soupape (200) soit ouverte au maximum lorsqu'aucun ordre de commande n'est entré et un degré d'ouverture de la soupape (200) est commandé de manière à ce qu'elle soit ouverte de manière proportionnelle à une amplitude de l'ordre de commande,
et la soupape de commande (200) est commandée de telle sorte que lorsque l'ordre de commande est fourni en sortie, un degré d'ouverture de la soupape (200) soit réduit et un débit d'huile hydraulique soit réduit.

2. Chariot élévateur à fourche selon la revendication 1, dans lequel la vitesse de déplacement actuelle est calculée sur la base d'une valeur d'une vitesse de rotation du moteur (tours par minute) fournie à partir d'une unité de commande de moteur ou d'une valeur d'une vitesse de roulage fournie par la transmission 11.
